**Europäisches Patentamt**

**European Patent Office**

**Office européen des brevets**

(19)

(11) Numéro de publication : **0 007 846**

**B1**

(12) **FASCICULE DE BREVET EUROPÉEN**

(45) Date de publication du fascicule du brevet :
28.04.82

(21) Numéro de dépôt : 79400477.0

(22) Date de dépôt : 10.07.79

(51) Int. Cl.³ : **B 01 J 10/00**, B 01 J 19/24,
F 23 G  7/00, C 02 F 11/06

(54) **Dispositif de traitement de substances se présentant sous des phases différentes, tel que traitement de substances sous forme liquide, semi-liquide ou pâteuse, par une autre phase notamment gazeuse.**

(30) Priorité : 21.07.78 FR 7821658

(43) Date de publication de la demande :
06.02.80 (Bulletin 80/03)

(45). Mention de la délivrance du brevet :
28.04.82 Bulletin 82/17

(84) Etats contractants désignés :
AT BE CH DE FR GB IT LU NL SE

(56) Documents cités :
FR - A - 1 154 046
FR - A - 1 292 258
FR - A - 2 257 326
FR - A - 2 276 086
FR - A - 2 406 610

(73) Titulaire : **RHONE-POULENC INDUSTRIES**
**22 Avenue Montaigne**
**F-75008 Paris (FR)**

(72) Inventeur : **Prudhon, François**
**2, rue Delaunay**
**F-78000 Versailles (FR)**
Inventeur : **Scicluna, Augustin**
**118bis, avenue Victor Hugo**
**F-93300 Aubervilliers (FR)**

(74) Mandataire : **Martin, Henri et al**
**RHONE-POULENC RECHERCHES Service Brevets**
**Chimie et Polymères 25, quai Paul Doumer**
**F-92408 Courbevoie Cedex (FR)**

Imprimerie Jouve, 18, rue St-Denis, 75001 Paris, France

Dispositif de traitement de substances se présentant sous des phases différentes, tel que traitement de substances sous forme liquide, semi-liquide ou pâteuse, par une autre phase notamment gazeuse

La présente invention a trait à un dispositif de traitement de substances sous forme liquide, semi-liquide ou pâteuse, par une autre phase notamment gazeuse.

Elle s'applique en particulier à un dispositif utilisable pour le traitement des matières sous forme liquide entraînant ou non des matières solides en suspension, par un gaz à une température élevée.

Ce problème est classique dans le cas par exemple de traitement d'eaux résiduaires susceptibles de conduire à des matières sèches par oxydation.

On a déjà proposé plusieurs types de solutions pour résoudre ce problème.

C'est ainsi que dans le brevet français 2 075 354, on a proposé d'éliminer les déchets industriels liquides en les transformant à l'état de déchets solides par traitement à l'aide d'une solution de silicate et d'un agent de prise dudit silicate.

On voit qu'il ne s'agit pas d'une solution simple puisqu'elle fait appel à des composés extérieurs aux eaux résiduaires, qu'elle implique plusieurs étapes, et qu'elle conduit à un composé qu'il convient même d'éliminer, ce qui oblige dans le cas précipité à obtenir des résidus solides résistant à la dilution de l'eau afin de pouvoir les incorporer dans certains terrains, et ainsi les revaloriser.

Une toute autre solution est préconisée dans le FR-A-2 320 268 qui consiste à mettre lesdites eaux en contact à des pH supérieurs à 7 et à des températures comprises entre 20 et 200 °C, avec de l'oxygène technique pur à une pression comprise entre la pression normale et 20 bars jusqu'à ce que le sulfure soit converti en thiosulfates puis à transformer ces thiosulfates en sulfates par action de l'oxygène technique à un pH de 0 à 5, ou de 0 à 8 pour des eaux résiduaires ne contenant que des sulfates, à des températures de 20 à 200 °C, à des pressions pouvant aller jusqu'à 20 bars, et éventuellement en présence de catalyseurs.

On voit donc qu'une telle solution est également longue et fait appel à plusieurs interventions qui impliquent des traitement physiques et chimiques.

Plus récemment dans la demande française 77 31554 déposée le 20 octobre 1977, publiée sous le n° 2 406 610 au nom de la demanderesse on a proposé de soumettre de telles eaux résiduaires à une pulvérisation et à un traitement thermique oxydant simultanés, puis de séparer de manière simple les résidus solides des composés volatils.

De manière pratique on a proposé de mettre en œuvre le procédé selon le FR-A-2 257 326 de mise en contact de substances se présentant sous des phases différentes selon lequel au moins une phase sert à former un écoulement puits-tourbillon à symétrie de rotation axiale et au moins une phase est introduite selon l'axe de symétrie de rotation dudit écoulement puits-tourbillon, la quantité de mouvement des éléments de volume de l'écoulement puits-tourbillon par rapport aux éléments de volume de la phase axiale, étant telle que ledit écoulement puits-tourbillon provoque à la fois la désintégration, la dispersion et la prise en charge de la phase axiale et son traitement éventuel par l'écoulement puits-tourbillon.

Le dispositif revendiqué dans ce brevet comprend une tête constituée essentiellement d'une enveloppe externe, telle que cylindrique, se terminant par un embout en forme de convergent, une chemise interne perforée définissant avec l'enveloppe externe un espace annulaire, au moins une entrée tangentielle permettant l'introduction de la phase gazeuse dans cet espace annulaire, laquelle s'échappe par les perforations de la chemise interne dans l'espace central et sort de la tête sous forme de trajectoires hélicoïdales. La phase axiale est introduite grâce à un conduit selon l'axe de symétrie de rotation de l'écoulement puits-tourbillon, dans la zone de contact, laquelle est matérialisée par un espace tel que bicône dont la partie amont en forme de divergent fait suite à l'embout en forme de convergent de la tête.

Dans le cas où l'on veut réaliser des traitements à haute température, il convient donc de produire une phase gazeuse à la température désirée.

Ceci peut être fait en faisant appel à un dispositif selon le FR-A-2 276 086 qui revendique un générateur de gaz chaud à paroi froide selon lequel on forme un écoulement hélicoïdal à symétrie de rotation, la flamme étant confinée dans la partie centrale du dispositif.

Les gaz chauds issus de ce générateur peuvent être introduits tangentiellement dans la partie annulaire de la tête d'un dispositif selon le FR-A-2 257 326.

Mais cette association qui implique l'introduction d'un gaz chaud dans un espace annulaire et son écoulement dans un passage restreint s'est traduite par un inconvénient majeur dès lors que, pour les besoins du traitement l'on a été obligé de dépasser des températures supérieures à environ 800 °C, alors même que l'on était en mesure de produire du gaz à cette température.

Or il se trouve que certains traitements nécessitent des températures de l'ordre de 900 à 1 200 °C.

Ceci implique des têtes de mise en contact qui puissent supporter de pareilles températures et résister à l'action des produits traités à ces températures et en milieu oxydant, ce qui n'est pas le cas des têtes classiques d'atomisation.

C'est pourquoi, dans la demande française 78 07248 du 14 mars 1978, publiée sous le n° 24 19754 au nom de la demanderesse, on a proposé un nouveau dispositif pour la mise en œuvre du procédé selon le FR-A-2257326 comprenant un ensemble pour former l'écoulement puits-tourbillon constitué par un élément de révolution définissant un espace annulaire, dans lequel la phase gazeuse est introduite tangentiellement, limité par un élément répartiteur à symétrie axiale conférant à l'écoulement hélicoïdal ainsi formé une symétrie axiale, ledit élément répartiteur étant mécaniquement indépendant de l'ensemble rigide de révolution.

De cette manière, l'ensemble peut être refroidi de manière satisfaisante et la phase gazeuse peut être portée à une température très élevée.

Malheureusement, la réalisation d'un tel dispositif n'est pas toujours aisée et l'on a trouvé que de manière simple on pouvait obtenir d'excellents résultats selon l'invention.

La présente invention a trait à un dispositif de traitement de substances sous forme d'une phase liquide, semi-liquide ou pâteuse, par une autre phase, notamment gazeuse comportant une chambre de combustion et une chambre de mise en contact, ladite chambre de combustion comprenant une enveloppe fermée à sa partie supérieure par une plaque de fond, un espace annulaire délimité intérieurement par une paroi intérieure perforée, un passage restreint, au moins un conduit d'amenée tangentielle d'une phase gazeuse, et un moyen d'injection axiale du carburant à travers la plaque de fond, et elle est caractérisée par le fait que l'enveloppe se termine en aval par un convergent dans lequel aboutit selon l'axe de rotation de la chambre de combustion un dispositif d'injection sensiblement au niveau du passage restreint, la chambre de mise en contact prolongeant en aval la chambre de combustion, selon le même axe de symétrie de rotation.

La phase gazeuse est avantageusement introduite sous faible pression, inférieure à un bar, et de préférence entre 0,2 et 0,5 bar au-dessus de la pression régnant en aval dans la chambre de mise en contact, la vitesse est généralement comprise entre 10 et 100 m/s, de préférence entre 30 et 60 m/sec.

La vitesse d'injection de la substance réagissant avec la phase gazeuse peut atteindre des vitesses de l'ordre de 100 à 150 m/sec.

Selon la présente invention, la phase axiale entrant dans la chambre de combustion est constituée par une phase carburante, par exemple du fuel, ou toute matière combustible que l'on injecte à l'entrée de ladite chambre et selon l'axe de symétrie du courant hélicoïdal.

On peut pour ce faire mettre en œuvre un procédé de pulvérisation classique tel que à pression, ou à rotation, mais on peut aussi mettre en œuvre un procédé selon le FR-A-2 257 326 par formation des gouttes par transfert de la quantité de mouvement grâce à un écoulement puits-tourbillon à grande quantité de mouvement.

La phase hélicoïdale est alors constituée par une phase gazeuse comburante généralement par de l'air ambiant, mais bien entendu cette forme de mise en œuvre n'est nullement limitative.

La substance à traiter est introduite sous forme liquide, semi-liquide, pâteuse, axialement à la fin de la chambre de combustion. La vitesse d'introduction est faible, de l'ordre de 0,03 à 10 m/sec.

De cette manière l'écoulement puits-tourbillon symétrique désintègre la veine liquide par transfert de la quantité de mouvement.

De cette manière il est possible de traiter de façon simple à haute température des substances liquides car on évite la mise en contact des produits avec les parois et de porter ces parois à la température de traitement.

Selon la présente invention les gaz à la sortie de la chambre de combustion peuvent être portés sans inconvénients à une température comprise entre 900 et 1 200 °C, ce qui permet par ailleurs d'introduire la matière à traiter à la température ambiante.

Aussi, une application particulière du dispositif de la présente invention concerne le traitement des eaux résiduaires.

On sait que dans ce dernier cas, il y a lieu à la fois d'évaporer une grande quantité de liquide et de réaliser un traitement thermique oxydant et simultanément de séparer les résidus solides ainsi obtenus, des composés volatils.

Le dispositif s'applique particulièrement dans le cas de traitement des eaux résiduaires présentant un taux de matières sèches allant jusqu'à 20-30 % ; certaines de ces matières sèches étant susceptibles d'oxydation, comme c'est le cas des sulfures et polysulfures qui sont alors éliminés sous forme de sulfates. Avantageusement dans ce cas on porte les gaz à la sortie de la chambre de combustion à une température comprise entre 900, et 1 200 °C, et de 350 à 500 °C dans la chambre de mise en contact.

On peut encore provoquer un refroidissement à la sortie de la chambre de mise en contact.

Aussi on peut prévoir à la sortie de la chambre de mise en contact une zone de mise en rotation qui, de manière simple, est statique.

On réalise de la sorte un système de mise hors poussière.

Ce système peut en outre comprendre les moyens d'injection d'une phase liquide et/ou gazeuse permettant d'introduire un liant ou de réaliser un effet de trempe. On peut aussi réaliser un ou plusieurs recyclages et l'introduction simultanée de plusieurs phases, notamment sous forme d'une co-pulvérisation.

Bien évidemment l'intérêt de la présente invention ne se limite pas au problème de la pollution causée par les eaux résiduaires.

Elle s'applique notamment toutes les fois qu'une température élevée est requise, c'est-à-dire notamment :

— évaporation rapide de composés volatilisables et notamment séchage de produit en suspension ou en émulsion aqueuse, ou concentration de solutions. Ceci est particulièrement intéressant dans le cas de la concentration d'acides minéraux tels acide phosphorique ou acide sulfurique.

— opération de mélange, et en général imprégnation de solides par des liquides.

— solidification de particules avec transformation en billes fines, ou traitement de surface de grains avec éventuellement changement dans la structure superficielle des grains.

— possibilité d'effectuer au sein du mélange homogène réalisé, des réactions telles que chlorurations ou oxydations.

Mais il est également possible de traiter des matières thermosensibles, telles que à base de protéines. Dans ce cas le dispositif selon l'invention permet de travailler avec un gradient de température élevé, donc de travailler dans des conditions autorisant un bon rendement thermique ; tout en évitant la dégradation des matières traitées comme selon le procédé décrit dans la demande française n° 2 396 250 déposée le 1er juillet 1977 au nom de la demanderesse.

Selon les particularités possibles de l'invention, la paroi intérieure perforée est de préférence perforée sur une longueur fonction du débit de calories et de la température des gaz.

Cette paroi perforée comporte des trous généralement circulaires qui, au moins du côté de l'extrémité fermée du dispositif, doivent être « à paroi mince », c'est-à-dire que le rapport du diamètre des trous sur l'épaisseur de la paroi doit être supérieur à 5 ; l'épaisseur minimum de la paroi n'ayant pour limite que des impératifs mécaniques. Ils sont en nombre au moins égal à 6 et répartis sur au moins un cercle, mais de préférence sur plusieurs cercles directeurs de la paroi cylindrique. On dispose la majorité des trous du côté amont du dispositif afin de favoriser le mélange des substances à mettre en contact et corrélativement d'assurer le préchauffage d'une partie de ces substances tout en protégeant les parois internes des effets thermiques de la réaction. La surface totale des trous situés du côté aval peut être faible soit de 1/10 à 1/100 de la surface totale des trous.

Si on désigne par $D_1$ le diamètre interne moyen de l'enveloppe externe et par $D_2$ celui de la paroi perforée, $1/2\,(D_1-D_2)$ est de préférence compris entre 1 et 10 cm selon le débit de courant hélicoïdal. Le diamètre $D_2$ est déterminé en fonction du dégagement thermique total de la réaction et est compris de préférence entre 0,4 et 0,5 $\sqrt{k}$ mm, k étant le nombre de kilocalories que libère par heure ce combustible en brûlant, ou en général la réaction provoquée.

Avantageusement $D_2$ ne doit pas être inférieur à 500 mm dans le cas d'introduction dans le courant rectiligne d'un réactif visqueux, par exemple du fuel lourd, lequel doit être dispersé de préférence de façon fine et homogène.

Il n'y a pas de dimension impérative du moyen d'amenée du carburant rectiligne axial. Celui-ci, généralement constitué par un tube, au moins à l'extérieur de l'appareil, doit permettre soit une bonne pulvérisation de liquide, soit une entrée de gaz sans perte de charge appréciable. La réalisation de ce moyen peut se prêter à de très nombreuses variantes. Par exemple, lorsque le combustible est liquide, on peut utiliser avantageusement un dispositif décrit dans le brevet français précité déposé par la demanderesse le 19 juin 1973, sous le numéro d'enregistrement national 73 22184 et publié sous le n° 2 257 326 et ayant pour titre « Procédé de mise en contact de substances se présentant dans des phases différentes » (ceci supprime la nécessité d'exercer une pression sur le combustible) ou un simple tube avec une sortie tronconique sur lequel est soudée à l'extérieur du dispositif une conduite par laquelle est introduit le gaz assurant la pulvérisation ; la seule précaution supplémentaire à prendre est d'éviter l'emploi d'un dispositif qui donnerait un flux très divergent (angle supérieur à 90 %) dans le cas d'introduction de liquide.

L'arrivée du courant gazeux mis ultérieurement en rotation se fait par une tubulure tangentielle, les conditions à respecter en ce qui concerne la section de cette tubulure sont avant tout commandées par des impératifs de construction et le souci de ne pas créer par ce moyen des pertes de charge excessives comme déjà dit précédemment ; une pression relative de 0,2 bar est généralement suffisante. L'ouverture mettant en communication cette tubulure et l'espace annulaire est de préférence à proximité de l'extrémité aval de cette chambre de combustion.

L'inflammation du combustible est assurée par un dispositif classique telle qu'une bougie entre les électrodes de laquelle éclate une étincelle. Cette bougie peut être montée sur un dispositif rétractable comprenant par exemple un soufflet métallique. L'étincelle est produite dans une zone où combustible et comburant sont en contact puis le dispositif d'allumage peut être retiré pour affleurer la paroi perforée.

Il reste évidemment possible d'enflammer le mélange ou d'amorcer la réaction par une flamme.

Du fait de l'avantage concernant la température peu élevée des parois, il est possible de réaliser l'appareil en acier ordinaire, l'intérêt d'utiliser l'acier inoxydable ou d'autres métaux résistant à la corrosion ne se présente que lorsqu'il est nécessaire d'éviter la présence de toutes poussières d'oxydes.

La présence du réfractaire est inutile.

Le combustible peut être un gaz tel que le méthane ou le propane par exemple ou un autre hydrocarbure léger, des résidus liquides à détruire par combustion avec éventuellement des goudrons ou de la suie en suspension ou un corps solide à la température ambiante et fondu avant son injection, du soufre par exemple. On peut également injecter d'autres corps de natures très diverses.

Mais on peut mettre en œuvre des chambres de combustion de forme différente.

On peut en particulier utiliser un espace annulaire torique pourvu d'une paroi perforée ou répartiteur mécaniquement indépendant amovible tel qu'on peut également utiliser une enveloppe cylindrique et une paroi perforée tronconique avec une entrée tangentielle aval et des perforations situées en amont.

La partie de mise en contact est conforme à celle décrite dans le FR-A-2 257 326 à la différence près que le mouvement puits-tourbillon utilisé est celui de la chambre de combustion.

La quantité de mouvement propre à l'écoulement puits-tourbillon doit être forte par rapport à celle des liquides, dans un rapport au moins 100 et de préférence de 1 000 à 10 000 fois, le mouvement propre des gaz est alors, dans ces conditions, imposé dans sa direction et son intensité aux gouttelettes de liquides isolées les unes des autres dans la zone de convergence des deux courants. La vitesse des liquides est par ailleurs réduite au voisinage du minimum permettant leur écoulement continu, la vitesse des gaz peut rester, dans ces conditions, assez faible pour ne pas nécessiter de fortes pressions.

Le rapport des masses de gaz et de liquide est évidemment choisi en fonction de divers facteurs dont la température de ces fluides et de l'opération finale à réaliser, par exemple la vaporisation du liquide, ce rapport étant au moins de deux.

Les vitesses et partant les quantités de mouvement, au niveau du passage restreint, sont calculées de façon simple d'après les débits d'entrée des fluides et la section de ce passage, les pressions intervenant peu. Le courant axial est considéré comme rectiligne et de section égale à celle de l'intérieur de son conduit, que celui-ci émerge ou non du passage restreint.

Les trajectoires, imposées par les gaz, forment, à leur sortie du passage restreint, l'une des deux familles de génératrices d'un hyperboloïde à une nappe, ou plus précisément d'un empilement feuilleté de plusieurs hyperboloïdes. Ces génératrices passent par une famille de cercles formant un anneau de faible largeur situé en aval du passage restreint du courant hélicoïdal avant de diverger. Cet anneau entoure une zone dépressionnaire dont l'effet se manifeste, d'une part, en amont sur le liquide constituant le courant rectiligne et, d'autre part, en aval, sur les gaz en faisant recycler une fraction de ces fluides. Le liquide se trouve fractionné en une multitude de gouttelettes, chacune étant prise en charge par un certain volume de gaz et soumise à un mouvement qui crée un effet de centrifugation, ceci améliore le contact avec le gaz vecteur, et dans le cas où une combustion a lieu, assure l'accrochage et la stabilité de la flamme.

Le rapport du débit des gaz sur celui des liquides peut varier dans de larges proportions, un accroissement de ce rapport diminue la dimension des gouttelettes formées.

Le procédé de mise en contact de substances sous différents états physiques peut ainsi être appliqué, à l'aide du dispositif décrit pour différentes opérations courantes en particulier dans les industries chimiques et alimentaires.

Dans ces opérations le courant soumis au mouvement tourbillonnaire est généralement un gaz ou une vapeur véhiculant éventuellement en suspension des solides ou liquides à mettre en contact avec les substances introduites axialement. Une pression de quelques centaines de grammes par centimètre carré (de 200 à 500 g/cm²) au-dessus de la pression régnant dans la partie de l'appareillage située en aval suffit pour assurer le bon fonctionnement du dispositif. Le mouvement tourbillonnaire engendré par ce courant crée, comme cela a été signalé, une légère dépression dans sa partie axiale, telle qu'un écoulement de fluide peut se produire dans la tubulure interne sans qu'il soit nécessaire d'exercer une pression sur ce fluide.

La chambre de mise en contact peut être constituée de manière simple par un bicône.

L'introduction de la phase, ou des phases à traiter se fait alors au niveau du passage restreint avantageusement à une distance du cercle de plus faible section comprise dans l'intervalle de plus ou moins un rayon par rapport au plan de ce cercle.

Avantageusement le diamètre externe du dispositif d'injection est au moins égal au 1/4 du diamètre du passage restreint, et de préférence égal à au moins les 2/3 de ce diamètre.

De manière à ne pas perturber la réaction qui se produit dans la chambre de combustion la substance (ou les substances) à traiter est amenée simplement par une tubulure coudée, mais on peut utiliser d'autres dispositifs, tels que injecteur annulaire situé sensiblement dans le plan du passage restreint.

Enfin, on peut prévoir des zones de refroidissement, soit au niveau de la chambre de mise en contact comme dans la demande française 2 419 754 déposée le 10 avril 1978 au nom de la demanderesse et selon laquelle on provoque un refroidissement sur la périphérie de la zone de contact des phases, soit un traitement thermique plus en aval selon la demande française publiée sous le n° 2 396 250 du 1er juillet 1977 selon laquelle à la sortie du traitement flash on soumet le produit à traiter à un brusque changement de température, ce traitement s'appliquant en particulier au cas de matières thermosensibles. Dans ce cas avantageusement on porte les gaz à la sortie de la chambre de combustion à une température comprise entre 200 et 700 °C et on soumet le milieu résultant à la sortie de la chambre de mise en contact à un traitement de refroidissement à une température comprise entre 20 °C et 120 °C.

Mais la présente invention sera plus aisément comprise à l'aide des schémas et exemples suivants donnés à titre illustratif, mais nullement limitatif.

La figure 1 représente un dispositif selon l'invention correspondant à un cas général de traitement d'une substance par une phase gazeuse.

La figure 2 illustre le cas plus particulier où l'on dispose à la sortie de la chambre de mise en contact un dispositif de post traitement notamment de mise hors poussière du dispositif.

La figure 3 illustre le cas plus particulièrement où l'on dispose un dispositif de refroidissement.

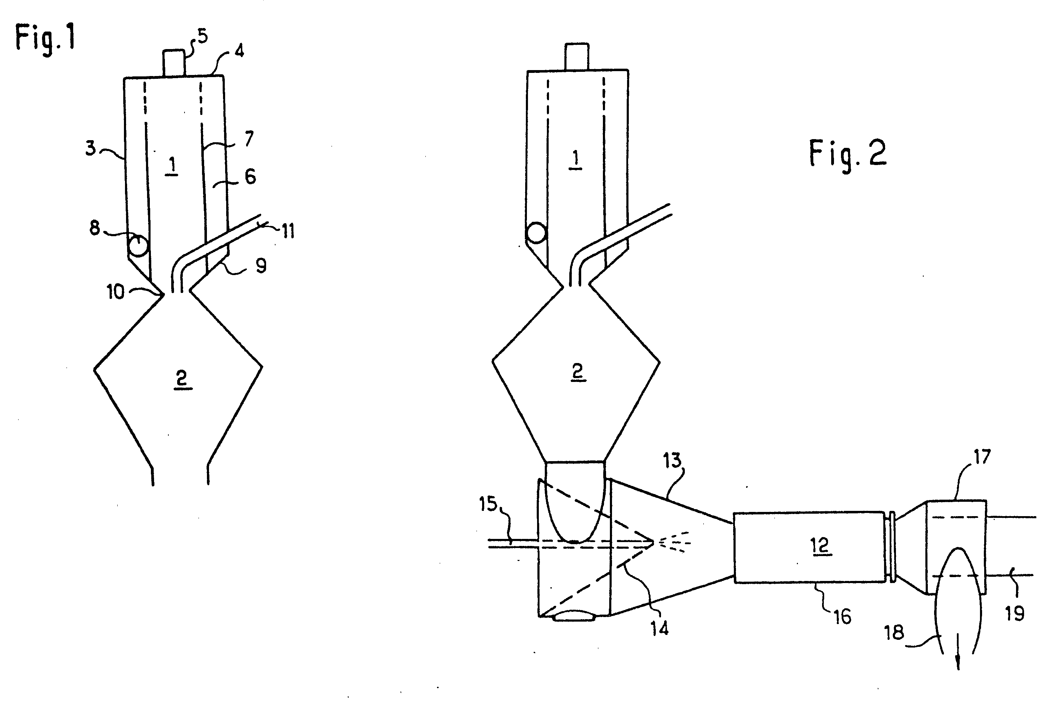

Le dispositif selon la figure 1 comprend une chambre de combustion 1 et une chambre de mise en contact 2.

La chambre de combustion 1 comprend une enveloppe 3 fermée à sa partie supérieure par une plaque de fond 4 dans laquelle est ménagé un espace pour la mise en place d'un dispositif de pulvérisation 5.

La chambre de combustion présente un espace annulaire 6 délimité intérieurement par une paroi cylindrique 7 perforée à sa partie amont.

Une phase gazeuse est introduite tangentiellement par un conduit 8 débouchant dans l'espace annulaire 6.

L'enveloppe 3 se termine en aval par un convergent 9 présentant un passage restreint 10, dans lequel aboutit, selon l'axe de rotation de la tête 1, un dispositif d'injection constitué par un conduit coudé 11, sensiblement au niveau de la section du passage restreint 10.

La chambre de mise en contact 2 est constituée par un bicône dont la partie amont en forme de divergent prolonge le convergent terminant la chambre de combustion 1.

Le dispositif selon la figure 2 comporte la même chambre de combustion 1 et de mise en contact 2, qu'à l'exemple 1, mais à la sortie du bicône 2 on a placé un dispositif de mise hors poussière 12 comprenant une enveloppe 13 étant forme de cône dans laquelle est disposé un cône de réception 14 juste en dessous du bicône 2, et éventuellement une amenée de liquide 15, ladite enveloppe en forme de cône 13 étant lui-même prolongé par un cylindre 16 qui permet au mouvement rotatif de se conserver et qui conduit les produits jusqu'à un séparateur centrifuge 17.

Le produit solide sort en 18 et le gaz en 19.

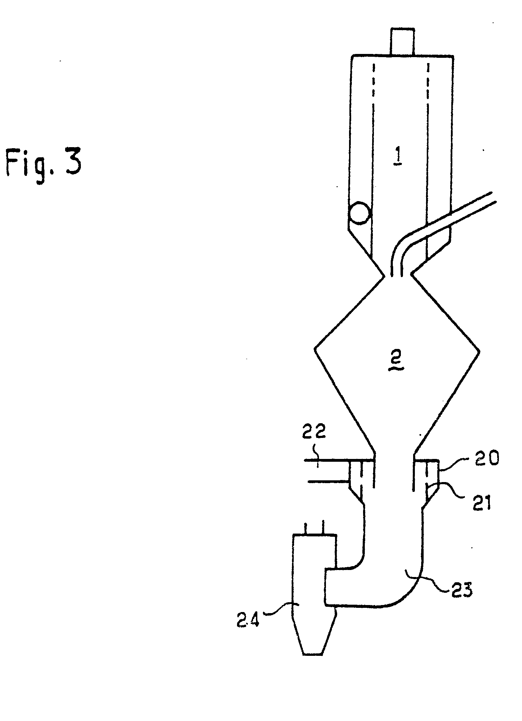

Le dispositif selon la figure 3 illustre un autre mode de réalisation, particulièrement adapté au cas des matières thermosensibles.

Ce dispositif est semblable à celui de la figure 1, sauf qu'on a disposé, à la sortie du bicône 2, un système de refroidissement comprenant une tête, possédant une paroi perforée 21, et un conduit tangentiel 22, une tubulure 23 et un cyclone 24.

Bien entendu, la présente invention n'est pas limitée aux formes de réalisation illustrées, on peut en particulier mettre en œuvre des chambres de contact qui ne soient pas biconiques, ou présentant une partie cylindrique intermédiaire.

A l'aide d'un dispositif selon la figure 2 on a réalisé l'exemple de mise en œuvre suivant.

On traite une eau résiduaire renfermant en poids 20 % de NaCl, 3 à 4 % de sulfate de Na, et environ 5 % de matières organiques renfermant des polysulfures.

Le dispositif utilisé présente une tête 1 de hauteur hors toute égale à 193 mm dont 43 mm pour le convergent.

Le diamètre de l'enveloppe 3 est de 120 mm, celui de la paroi perforée 7 de 82 mm. Le diamètre du passage restreint est de 18 mm, le diamètre interne du conduit 11 au niveau du passage restreint est de 12 mm, ce qui représente donc un rapport de 2/3 par rapport à celui du diamètre de la section en 10, enfin le diamètre intérieur de la section du tube 11 est de 4 mm.

L'angle au sommet du cône supérieur du bicône est de 90 °C.

Le débit d'air alimentant la chambre de combustion par le tube 8 est de 60 Nm³/h, la pression de 0,4 bar. Le carburant injecté en 5 est constitué par du propane. Dans cet exemple on règle l'injection du propane de manière à obtenir une température d'environ 1 000 °C au niveau du passage restreint et d'amenée des eaux à traiter de sorte à maintenir une température de l'ordre de 500 °C à la sortie du bicône.

La phase solide renferme pour 30 kg d'eau traitée 3 kg de NaCl et 3 kg de sulfate de sodium.

On observe en particulier que la phase gazeuse ne présente pas de fines et est constituée en dehors des gaz de combustion essentiellement de vapeur d'eau ne renfermant que des traces de $SO_2$.

Cet exemple met donc en évidence l'intérêt de la présente invention qui permet soit de traiter des matières thermosensibles sans les dégrader avec un bon rendement thermique, soit d'effectuer des traitements à haute température par exemple de matières polluantes.

Mais comme déjà dit, cet exemple n'est pas limitatif ; on peut en particulier mettre en œuvre un dispositif semblable pour la concentration d'acides ou le traitement de produits tels que le gypse. On peut aussi introduire en cours d'opération d'autres produits par co-pulvérisation, un liant, ou procéder à un recyclage de certains produits.

**Revendications**

1. Dispositif de traitement de substances sous forme d'une phase liquide, semi-liquide où pâteuse, par une autre phase, notamment gazeuse, comportant une chambre de combustion (1) et une chambre de mise en contact (2), ladite chambre de combustion (1) comprenant une enveloppe (3) fermée à sa partie supérieure par une plaque de fond (4), un espace annulaire (6) délimité intérieurement par une paroi intérieure perforée (7), un passage restreint (10), au moins un conduit (8) d'amenée tangentielle d'une phase gazeuse, et un moyen d'injection axiale du carburant (5) à travers la plaque de fond (4), caractérisé par le fait que l'enveloppe (3) se termine en aval par un convergent (9) dans lequel aboutit selon l'axe de rotation de la chambre de combustion (1) un dispositif d'injection (11) sensiblement au niveau du passage restreint (10), la chambre de mise en contact (2) prolongeant en aval la chambre de combustion (1), selon le même axe de symétrie de rotation.

2. Dispositif selon la revendication 1, caractérisé par le fait que la paroi intérieure (7) est constituée par un élément amovible.

3. Dispositif selon l'une des revendications 1 et 2, caractérisé par le fait que l'espace annulaire (6) est torique.

4. Dispositif selon l'une des revendications 1 à 3, caractérisé par le fait que le rapport du diamètre externe du dispositif d'injection (11) de la substance à traiter au diamètre interne du passage restreint (10) est d'au moins 1/4, avantageusement 2/3.

5. Dispositif selon l'une des revendications 1 à 4, caractérisé par le fait qu'il présente à la sortie de la chambre de combustion (1) un système de refroidissement.

## Claims

1. Apparatus for treating substances in the form of a liquid, semi-liquid or pasty phase, with another phase, in particular a gaseous phase, comprising a combustion chamber (1) and a contacting chamber (2), said combustion chamber comprising a casing (3) which is closed in its upper portion by an end plate (4), an annular space (6) which is delimited internally by an internal perforated wall (7), a restricted passage (10), at least one conduit (8) for the tangential feed of a gaseous phase, and a means (5) for axial injection of the fuel through the end plate (4), characterised in that the casing (3) terminates at the downstream end with a convergent portion (9) in wich an injection device (11) terminates substantially at the level of the restricted passage (10), on the axis of rotation of the combustion chamber (1), the contacting chamber (2) extending the combustion chamber (1) in a downstream direction on the same axis of rotational symmetry.

2. Apparatus according to claim 1 characterised in that the internal wall (7) comprises a removable element.

3. Apparatus according to one of claims 1 and 2 characterised in that the annular space (6) is toric.

4. Apparatus according to any one of claims 1 to 3 characterised in that the ratio of the outside diameter of the device (11) for injecting the substance to be treated, to the inside diameter of the restricted passage (10), is at least 1/4 and advantageously 2/3.

5. Apparatus according to one of claims 1 to 4 characterised in that it has a cooling system, at the outlet from the combustion chamber (1).

## Ansprüche

1. Vorrichtung zum Behandeln von Substanzen in Form einer flüssigen, halbflüssigen oder pastenartigen Phase, mit einer anderen Phase, insbesondere einer Gasphase, bestehend aus einer Verbrennungskammer (1), einer Behandlungskammer (2), wobei die Verbrennungskammer (1) von einem Mantel (3) umgeben ist, der in seinem oberen Teil durch eine Deckplatte (4) abgeschlossen ist, einen Ringraum (6), der innen durch eine perforierte Innenwand (7) begrenzt wird, sowie eine Einschnürung (10), mindestens eine tangentiale Zufuhrleitung (8) für eine Gasphase und eine axiale Zufuhrleitung (5) für den Brennstoff durch die Deckplatte (4), dadurch gekennzeichnet, daß der Mantel (3) in einen konisch verengten Bereich (9) ausläuft, in den entlang der Rotationsachse der Verbrennungskammer (1) eine Injektionsleitung (11) auf der Höhe der Einschnürung (10) einmündet, und daß die Behandlungskammer (2) gleichachsig mit der Verbrennungskammer (1) unter dieser angeordnet ist.

2. Vorrichtung nach Anspruch 1, dadurch gekennzeichnet, daß die Innenwand (7) ein herausnehmbares Bauteil ist.

3. Vorrichtung nach einem der Ansprüche 1 und 2, dadurch gekennzeichnet, daß der Ringraum (6) torisch ist.

4. Vorrichtung nach einem der Ansprüche 1 bis 3, dadurch gekennzeichnet, daß das Verhältnis von Außendurchmesser der Injektionsleitung (11) für die zu behandelnde Substanz zum Innendurchmesser der Einschnürung (10) mindestens 1 : 4, vorteilhafterweise 2 : 3 beträgt.

5. Vorrichtung nach einem der Ansprüche 1 bis 4, dadurch gekennzeichnet, daß am Austritt der Verbrennungskammer (1) ein Abkühlsystem vorhanden ist.

Fig.1

Fig. 2

0 007 846

Fig. 3